# EUROPEAN PATENT APPLICATION

(11) **EP 4 184 118 A1**
(43) Date of publication of application: **24.05.2023**
(21) Application number: 21209768.7
(22) Date of filing: 23.11.2021
(51) Int. Cl.: G01C 21/34, G01C 21/36

(54) **METHOD OF DETERMINING AND COMMUNICATING A TRAVEL ROUTE OF A USER OF A ROAD VEHICLE**

(71) Applicant: Bayerische Motoren Werke Aktiengesellschaft, 80809 München (DE)
(72) Inventor: Zaki, Tarek, 81829 München (DE)

(57) **Abstract**

A method of determining and communicating a travel route is described. The travel route is divided into sections. The first section can be traveled by a road vehicle like a car. The second section of the route is traveled by means other than the vehicle. Information representing the second section of the route is sent to a signaling device. From the signaling device, information representing the second section of the route is outputted to a user of the vehicle. A navigation device, a signaling device and a road vehicle using the method are also described.

## Description

The invention concerns a method of determining and communicating a travel route of a user of a road vehicle, especially a car, as well as a navigation device executing the method.

Often, road vehicles like cars cannot be parked directly at the destination. In some environments like busy cities or large factories, the distance may even be as much as several blocks from the parked vehicle to the intended final destination. After parking the vehicle, the user may be forced to use a different means of transport, like walking, public transportation or a vehicle from another service, like a bicycle or a scooter. When a user of a road vehicle arrives at a previously unknown location, the user will typically, after parking the vehicle, execute something like the following procedure: search manually once again the destination on a preferred maps app on the user's personal mobile device (smartphone, smartwatch, etc.), exit the vehicle, walk for a few steps to calibrate the integrated compass of the mobile device and to find out the direction where the map's pointer is heading. Only then the user of the vehicle will be able to continue to the final destination. Newer personal mobile devices may use augmented reality technologies like immersive instructions, where directions in the form of arrows, street names etc. are overlayed onto an image of the surrounding area. The user of the vehicle will still need some time to orient the device in the present environment. Even with the help of modern technology, the user of the vehicle will have to perform a somewhat lengthy procedure before being able to continue travelling towards the destination after the vehicle has been parked.

The present invention aims to alleviate the problem of transiting from the use of a road vehicle to a different means of transportation when travelling to a destination.

This problem is solved by means of the independent claims. Embodiments and improvements of the invention are the subject of the dependent claims.

A first aspect of the invention is a method of determining and communicating a travel route of a user of a road vehicle, the method comprising the steps of detecting, with a navigation device, a geographical location of the road vehicle, determining a geographical location of a destination and determining a route to the destination, wherein a first section of the route with a start point and an end point is designated to be travelled by means of the vehicle and a second section of the route is designated to be travelled by means other than the vehicle; navigating the vehicle along the first section of the route; transmitting information representing at least part of the second section of the route to a signaling device upon arriving at the end point of the first section; receiving the information representing at least part of the second section of the route and outputting the information representing at least part of the second section of the route to the user.

A "travel route" in the sense of this invention is a path which is followed by a road vehicle. This path is often determined by means of a navigation device. This path is the route from the current position of the vehicle to a destination.

"Means other than the vehicle" may mean that the user is traveling the second section of the route by walking, by making use of public transport, or by using a different transport service like renting a scooter, bicycle or taxi to complete the second section of the route.

"Navigating" in the sense of this invention means that the road vehicle is made to follow the first section of the route to the destination. In most cases this is currently done by a human driver. Autonomous driving along the travel route is also possible. In this case, the vehicle is guided by a computer system.

"Transmitting" in the sense of this invention means that information is transferred from a first device, like the navigation system, to a second device, like a display or other signaling device of the vehicle. The second device may also be a portable device of the user of the vehicle. Another example of "transmitting" is the transfer of information within a device from a first computer program or app to a second computer program or app.

A "signaling device" in the sense of this invention is a device which is suitable to output the information representing the second part of the route to the user of the device. Examples of a signaling device can be a display of the vehicle, a projector which is mounted to the vehicle and which is beaming information onto a surface in the periphery of the vehicle, a mobile device which the user is carrying, a navigation device of a different vehicle or a communication system of a transport service.

As described above, when a user is traveling with a road vehicle like his car to a destination, it is often necessary that the car is parked at a distance from the final destination. The user of the car has to orient himself in an environment which may be completely unfamiliar to him. By using the method as described above, the cognitive burden on the user is alleviated. This can be achieved if information concerning at least the first steps of the route to the final destination are indicated for example by means of a projector which is beaming information on the recommended direction for the second section of the route onto the ground next to the vehicle. Another way of informing the user of the vehicle about the second section of the route to the destination may be that the second section of the route is displayed on the screen of the navigation system before the user exits the vehicle. The second section of the route may also be displayed in a head up display or data glasses at the time when the user is still inside the vehicle. The user of the car may also receive information about the second section of the route via the audio system of the car by means of speech generation.

In some embodiments, the information representing at least part of the second section of the route comprises a geographical location and a geographical orientation of the vehicle.

"Geographical orientation" in the sense of this invention means the orientation as it is indicated for example by a compass.

If this information on the compass orientation of the vehicle is included in the information that is communicated to a signaling device, this can be used as another reference for the signaling device to create meaningful information which can be output to the user and which is helpful for the user in the efforts to orient him-/herself in the current environment.

A second aspect of the invention is a computer program comprising instructions which, when the program is executed by a computer, cause the computer to carry out the method of the first aspect or of an embodiment.

A third aspect of the invention is a computer readable storage medium comprising instructions which, when executed by a computer, cause the computer to carry out the method of the first aspect or of an embodiment.

A fourth aspect of the invention is a navigation device for a road vehicle which navigation device is configured to detect a geographical location and to determine a geographical location of a destination; and which is further configured to determine a route to the destination, wherein a first section of the route with a start point and an end point is designated to be travelled by means of the vehicle and a second section of the route is designated to be travelled by means other than the vehicle. The navigation device is further configured to transmit information representing at least part of the second section of the route upon arriving at the end point of the first section to a signaling device.

A device to execute the method can be the navigation device of the vehicle or a different navigation system which may be realized in a mobile device. A navigation device of the fourth aspect is especially suited to enable the user of the vehicle to be oriented quickly after exiting the vehicle and to continue along the second section of the route. The information representing at least part of the second section of the route is used by the signaling device to output information to the user of the vehicle so that the user can continue quickly along the second section of the route.

In some embodiments, the navigation device for a road vehicle is configured to transmit the information representing at least part of the second section of the route to at least one of the following signaling devices: a signaling device of the vehicle; a personal device being configured to output at least part of the second section of the route; and a processor of a transport service.

"Signaling device of the vehicle" in the sense of the present invention can be the display of the navigation system itself, a head up display in the vehicle, a different display in the vehicle (for example, the multifunctional display of the vehicle or the display in the instrument panel of the vehicle) and/or the sound system of the vehicle

The devices of these embodiments of the fourth aspect of the invention are especially suited to enable the user of the vehicle to continue quickly along the second section of the route. When the user has gathered and understood the information representing the second section of the route which was presented to him by one of the devices mentioned above, the user is enabled to continue quickly along the second section of the route.

In some embodiments, the signaling device of the vehicle is configured to receive, from a navigation device according to the fourth aspect, information representing at least part of the second section of the route; the signaling device comprising at least one optical transducer configured to project optical light signals onto a surface in the periphery of the road vehicle, wherein the light signals represent at least part of the second section of the route.

In these embodiments of the signaling device, the light signals comprise at least one of a first light signal indicating a walking direction to be followed immediately after exiting the vehicle; a second light signal indicating a direction to the destination; a third light signal indicating a remaining travelling distance and/or a fourth light signal indicating a remaining travelling time to the destination.

The signaling device of the vehicle may also be a projector which can be used to project information onto the ground or a wall in the vicinity of the vehicle in order to inform the user by means of indicators like arrows about the direction to the final destination.

The first and second light signals can be simple arrows. The walking direction may be the walking direction along the street or the walking direction towards the exit of a parking garage or other parking area. Additionally or alternatively the light signals may contain textual information like the name of the street.

These embodiments are also helpful in the respect that they allow the user of the vehicle to continue quickly along the second section of the route by displaying information concerning the second section on a surface like the ground next to the vehicle or a wall. The user of the vehicle is directed without having to consult a personal device like a smartphone before continuing along the second section of the route.

In some embodiments the signaling device is configured to receive, from a navigation device according to embodiments of the fourth aspect, information representing at least part of the second section of the route; the signaling device comprising at least one of an optical display configured to output information representing at least part of the second section of the route; and an acoustic output unit configured to output information representing at least part of the second section of the route.

It is possible that the signaling device is an Internet of things (loT) device like a mobile phone, a smart watch, a set of data glasses, a tablet, earplugs or headphones of the user of the vehicle. The mobile phone or other personal device of the user may be configured to display the second section of the route optically or to give instructions in natural language to the user on how to follow the second section of the route.

In these embodiments it is helpful for the user of the vehicle if the user is enabled to take on the information representing the second section of the route either visually from the display or acoustically. If the signaling device is located inside the vehicle, the user may gather the information representing the second section of the route by reading a map or following a video presentation on a display, like the screen of the vehicle or a head up display. The video may contain information which has been obtained from an internet service which contains images representing the environments of the second section of the route. Some of these services are known under names like street view or look around. It is helpful if the information from such a service is enriched by information representing the second section of the route. Such information may contain for example directions or street names. The imagery presented to the user of the vehicle may be achieved using augmented reality or artificial intelligence methods.

If the signaling device is a personal mobile device the information representing the second section of the route, it is helpful if the information is presented acoustically e. g. by means of a headset. In this way the user is enabled to keep on gathering visual information from the environment. The user will better be able to react to traffic because the user is not distracted by keeping his eyes on the display of the mobile device.

A fifth aspect of the invention is a road vehicle comprising a navigation device according to the fourth aspect.

In some embodiments, the road vehicle comprises at least one signaling device according to embodiments of the fourth aspect.

In some embodiments, the road vehicle comprises at least one transducer for each side of the vehicle which side has at least one door; and the at least one transducer is configured to emit light signals specific to the respective door.

The method according to the first aspect is preferably executed with one of the devices according to the fourth and fifth aspects of the invention, especially one of the embodiments. The devices according to the fourth and fifth aspects of the invention are preferably configured to execute the method according to the first aspect, especially one of its embodiments.

Further advantages, features and applications can be found in the detailed description as follows.
**Fig. 1** is a top view of a road vehicle emitting a routing signal;
**Fig. 2** is a view of the cabin of the road vehicle according to the invention;
**Fig. 3** is a flowchart showing the steps of the method.

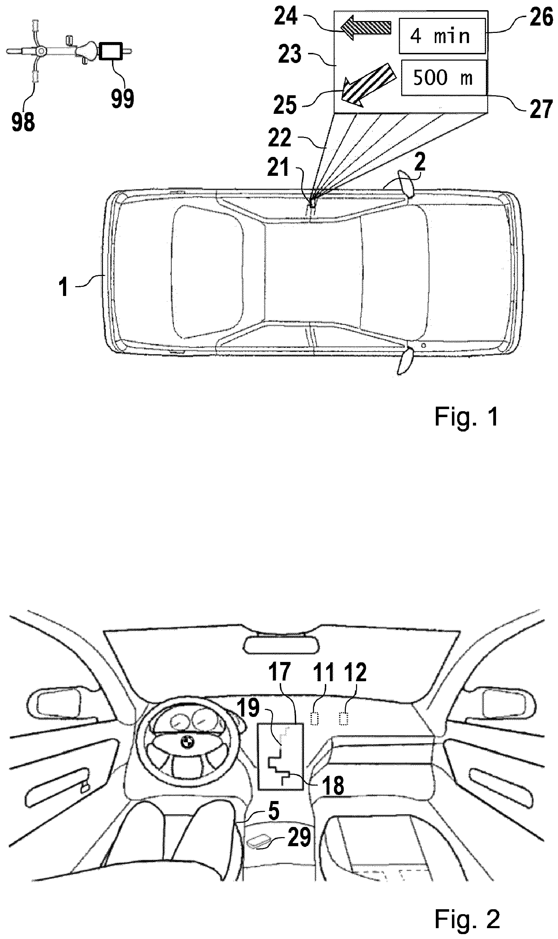

**Fig. 1** is a top view of a road vehicle emitting a routing signal. The vehicle 1 has been parked at the end of the first section of the route. The driver is about to leave the vehicle 1 through the door 2. The navigation system (shown in **Fig. 2**) has determined the second section of the route. The navigation system has transmitted information representing at least part of the second section of the route to a signaling device (shown in **Fig. 2**). The signaling device has transmitted relevant parts of this information to a transducer 21. The transducer 21 is emitting a light signal 23 along light path 22. The light signal 23 comprises an arrow 24. This arrow 24 indicates the direction which the user of the vehicle 1 should be following immediately after exiting the vehicle 1. The second arrow 25 indicates the direction towards the final destination of the second section of the route. The light signal 23 further comprises characters 26 indicating the travel time towards the final destination. The light signal 23 also has characters 27 indicating the total distance towards the final destination. As can be seen in **Fig. 1****,** the light signal 23 is specific to the respective door 2.

Walking towards the final destination, the user of the vehicle might notice a bicycle 98. This bicycle 98 is owned by a transport service which offers these bicycles for loan. For controlling and accounting purposes, bicycle 98 is equipped with a computer 99. The user of the vehicle 1 may have a contract with the transport company. If this contract is registered with the control system of vehicle 1 or with the mobile device of the user of the vehicle, the control system of the vehicle or the mobile device of the user of the vehicle can transmit information concerning the second section of the route to the computer 99 of the bicycle 98 via a mobile communication system (not shown). The user of the vehicle now has the possibility to decide either to continue walking or to make use of the bicycle 98 by completing the necessary steps either on the computer 99 of the bicycle 98 and/or his mobile device.

A further possibility for using a bicycle, scooter or similar lightweight vehicle might be that such a vehicle is transported in the trunk of the road vehicle to the end point of the first section of the route. All of these vehicles may themselves be loT capable by means of a computer mounted to the vehicle and, as such, be personal devices.

**Fig. 2** is a view of the cabin of the road vehicle according to the invention. The driver 5 has a mobile device 29 inside the cabin. **Fig. 2** shows a situation at the beginning of the travel when the navigation device 11 has calculated the route to the final destination. In other words, the vehicle is still at the start point of the route. The multifunctional display 17 shows the first section 18 of the route. This section is destined to be traveled with road vehicle 1. The second section 19 of the route is also displayed. This second section of the route cannot be traveled by means of vehicle 1. For example, in inner cities in Europe some areas are accessible only by walking and/or by bicycle. In such a situation, the vehicle 1 has to be parked at a distance from the final destination. The map of the navigation system 11 contains information on this fact that the final destination cannot be reached by the vehicle. Therefore, it also displays a second section 19 where the user can reach the destination which is also called end point by walking, by public transport or by renting another personal vehicle like a bicycle or a scooter. It is understood that when the vehicle 1 has reached the end of the first section 18 of the route, the navigation device will have on its display an image showing only the second section 19 of the route. The presentation of the second section 19 of the route will fill almost the entire display 17. When the vehicle 1 has reached the end of the first section 18 of the route, the navigation device 11 transmits information representing at least part of the second section 19 of the route to the signaling device 12. This information may represent the actual route by itself, including the orientation of the route, relative to the vehicle or to the user, as well as one or more suggestions for the type of transport (i. e. walking, bicycle, scooter). The signaling device 12 will transmit the information it received from navigation device 11 to the mobile device 29 and to the transducer 21 (see **Fig. 1**). This transmission will cause the transducer 21 to display the information shown in **Fig. 1****.** Devices 11 and 12 are normally mounted behind the dashboard of the vehicle 1. They will not be visible from the cabin. Therefore, they are shown in **Fig. 2** outlined with small squares.

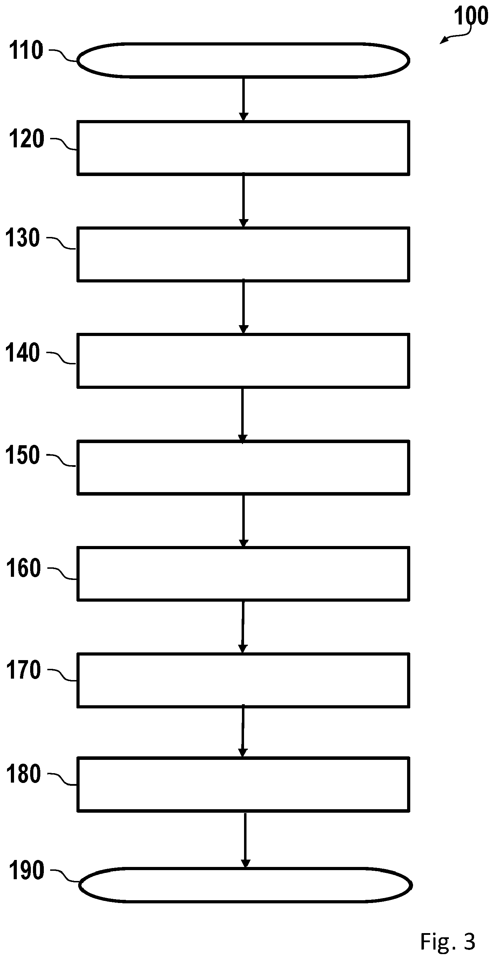

**Fig. 3** is a flowchart showing the steps of the method 100. The method 100 will start in step 110. In step 120, at the beginning of the travel, the navigation device 11 will determine the best route from the start point to the end point, i. e. the final destination.

This determination is normally done by entering geographical coordinates or an address into the navigation system 11, by means of typing or by automatic speech recognition. The determination may further be performed by entering the route from a mobile device. A possible example might be that the user of the invention starts by walking towards the destination guided by the navigation app of the mobile device. When his walking experience is being impaired by a sudden rain shower, the user spots a suitable road vehicle which is operated by a car sharing service. Using the app of the car sharing service on the mobile device, the user gets access to this vehicle. The navigation app of the mobile device of the user will then transfer the destination and possibly information on the route to the destination to the navigation device 11 of the vehicle. Thus, the user of the invention will experience a seamless transition from the means of transport by walking to the use of the road vehicle.

Some final destinations cannot be reached with the vehicle 1. This is often the case in European inner cities. It means that the vehicle 1 has to be parked at some distance to the final destination. This parking spot is the endpoint of the first section of the route. The user 5 of the vehicle 1 will have to follow the second section of the route by walking or other means of transport instead of using the vehicle 1. The result of the determination of the route from start point to end point is shown in **Fig. 2** on the display 17 as a first section 18 of the route and a second section 19 of the route.

Returning to **Fig. 3** in step 130 of the method 100, the vehicle will be navigated to the end point of the first section 18 of the route. This navigation can be done by the driver or by a control system of the vehicle 1, if the vehicle 1 is an autonomous vehicle. In step 140, when the vehicle has arrived at the end point of the first section 18 of the route, the navigation device 11 will detect that the vehicle 1 has arrived at this point. The detection will also include the compass orientation of the road vehicle 1 when it has been parked. In step 150, the second section 19 of the route will be determined by the navigation system. It is helpful if this step is performed only when the vehicle has been parked at the end point of the first section 18, because only at this time it is possible to determine the precise geographical coordinates of the location at which the vehicle has been parked.

In step 160, the information representing at least part of the second section 19 of the route will be determined. This information will be selected according to the signaling device to which it will be transferred in step 170. For example, the signaling device 12 (see **Fig. 2**) can cause the transducer 21 to display the information as shown in **Fig. 1****.** In this case, the information may include the arrows and the fields with characters. In order to correctly display the arrows 25 and 26 in step 180, the signaling device 12 will receive information concerning the relative orientation of the vehicle 1 as well as the position of the respective door on the vehicle with respect to the geographical orientation of the beginning of the second section of the route and the geographical location of the final destination.

In another example, the second section of the route will be displayed to the user 5 in step 180 for example on display 17. It is also possible to use a head up display or to output the information on the second section of the route by speech generation via the audio system of the vehicle 1.

In a further example, the signaling device can be a personal device like the mobile phone 29 of the user 5. In this case, the information may contain the complete map of the second section 19 of the route including additional information like, suggested means of travel, travel time, travel distance and others. This information will then be displayed in a corresponding application of the mobile device in step 180 of the method. This may be a map application or an application in which image information of the current environment of the user of the vehicle can be displayed. This information from the map or the image information may be overlaid with directions and/or textual information like street names. Directional information concerning the compass signal of the vehicle may also be received by the personal device and then be outputted to the user of the personal device. Thus, it becomes easier for the user to orient him-/herself. This app may output the corresponding information in step 180 either on an optical display to be viewed by the user or acoustically with a speech generation software.

Another example of a signaling device to which information representing the second section of the route can be transmitted is the computer 99 on the bicycle 98. It is possible that the bicycle 99 has a navigation computer (not shown) on the handlebar. When the user 5 of vehicle 1 decides to use the bicycle 98, the user will find directions to the final destination in the display of the navigation system. It is understood that the bicycle 98 serves only as an example for a means of travel. This means of transport may also be e. g. a scooter.

The method ends in step 190.

### LIST OF REFERENCE NUMERALS

- 1: road vehicle
- 2: door
- 5: user
- 11: navigation device
- 12: signaling device
- 17: display screen
- 18: first section of the route
- 19: second section of the route
- 21: transducer
- 22: light path
- 23: projected optical light signal
- 24: first direction
- 25: second direction
- 26: travel time
- 27: travel distance
- 29: mobile device
- 98: bicycle
- 99: processor of a transport service
- 100: method of communicating a travel route
- 110: start of the method
- 120: step of determining a route
- 130: step of navigating the vehicle along the first section of the route
- 140: step of detecting arrival at the end of the first section
- 150: step of determining the second section of the route
- 160: step of determining information about the second section of the route
- 170: step of sending information about second section to signaling device
- 180: step of outputting the information about second section to a user
- 190: end of the method

## Claims

1. Method of determining and communicating a travel route of a user (5) of a road vehicle (1), the method comprising the steps of
detecting, with a navigation device (11), a geographical location of the road vehicle (1), determining a geographical location of a destination and determining a route to the destination, wherein a first section (18) of the route with a start point and an end point is designated to be travelled by means of the vehicle (1) and a second section (19) of the route is designated to be travelled by means other than the vehicle;
navigating the vehicle (1) along the first section (18) of the route;
transmitting information representing at least part of the second section (19) of the route to a signaling device (12) upon arriving at the end point of the first section (18);
receiving the information representing at least part of the second section (19) of the route and outputting this information representing at least part of the second section (19) of the route to the user (5).

2. Method according to claim 1, wherein the information representing at least part of the second section (19) of the route comprises a geographical location of the vehicle (1) and a geographical orientation of the vehicle (1).

3. Computer program comprising instructions which, when the program is executed by a computer, cause the computer to carry out the method according to claim 1 or 2.

4. Computer readable storage medium comprising instructions which, when executed by a computer, cause the computer to carry out the method according to claim 1 or 2.

5. Navigation device (11) for a road vehicle (1), the navigation device (11) being configured to
detect a geographical location and to determine a geographical location of a destination; the navigation device (11) being further configured to determine a route to the destination, wherein a first section (18) of the route with a start point and an end point is designated to be travelled by means of the vehicle and a second section (19) of the route is designated to be travelled by means other than the vehicle; the navigation device (11) being further configured to
transmit information representing at least part of the second section (19) of the route upon arriving at the end point of the first section (18) to a signaling device (12).

6. Navigation device (11) for a road vehicle (1),
configured to transmit the information representing at least part of the second section (19) of the route to at least one of the following signaling devices (12):
a signaling device (12, 17) of the vehicle (1)
a personal device (29) being configured to output at least part of the second section (19) of the route; and
a processor (99) of a transport service.

7. Signaling device (12) of a vehicle (1), configured to receive, from a navigation device (11) according to claim 6, information representing at least part of the second section (19) of the route;
the signaling device (12) comprising at least one optical transducer (21) configured to project optical light signals (23) onto a surface in the periphery of the road vehicle (1), wherein the light signals (23) represent at least part of the second section (19) of the route.

8. Signaling device (12) according to claim 7, the light signals (23) comprising at least one of
a first light signal (24) indicating a walking direction to be followed immediately after exiting the vehicle (1);
a second light signal (25) indicating a direction to the destination;
a third light signal (26) indicating a remaining travelling distance and/or a fourth light signal (27) indicating a remaining travelling time to the destination.

9. Signaling device (12) of a vehicle (1), configured to receive, from a navigation device (11) according to claim 6, information representing at least part of the second section (19) of the route;
the signaling device (12) comprising at least one of
an optical display (17) configured to output information representing at least part of the second section (19) of the route; and
an acoustic output unit (20) configured to output information representing at least part of the second section (19) of the route.

10. Road vehicle (1) comprising:
a navigation device (11) according to claim 5:

11. Road vehicle (1) according to claim 10 comprising
at least one signaling device (12) according to any of claims 7 to 9.

12. Road vehicle (1) according to claim 10 comprising
at least one transducer (21) for each side of the vehicle (1) which side is equipped with at least one door (2);
the at least one transducer (21) being configured to emit light signals (23) specific to the respective door (2).
